# EUROPEAN PATENT APPLICATION

(11) **EP 0 545 727 A2**
(43) Date of publication of application: **09.06.1993**
(21) Application number: 92311087.8
(22) Date of filing: 04.12.1992
(51) Int. Cl.: G11B 27/32, G11B 27/11, G11B 27/34, G11B 27/00

(54) **Video cassette directory**

(30) Priority: 05.12.1991 IL 100252
(71) Applicant: THE DSP GROUP, INC., San Jose, CA 95117 (US)
(72) Inventor: Heiman, Arie, Ra'anaba 43 555 (IL)
(74) Representative: Hillier, Peter

(57) **Abstract**

A video recorder and cassette directory managing system comprising a video recorder (12) and a video cassette directory manager (10) operative to provide a directory indication to a user of items recorded on at least one video cassette (16).

## Description

### FIELD OF THE INVENTION

The present invention relates to video cassette recorders and video camera recorders.

### BACKGROUND OF THE INVENTION

Conventional video cassette recorders are not capable of providing an indication to a user of the material recorded on a cassette. If the user wishes to have a record of the material recorded on a cassette, he normally makes suitable notations on the cassette label. If the user wishes to record the location of each recorded program on the cassette, he must make a note of the tape location displayed on the index counter.

Similarly, camera recorders, also termed camcorders, do not provide an indication to a user of which events are recorded on a particular cassette, and at which locations.

### SUMMARY OF THE INVENTION

The present invention seeks to provide a video cassette recorder which provides an indication to a user of which programs are recorded on a particular video cassette.

The present invention also seeks to provide a video camera recorder which provides an indication to a user of which events are recorded on a particular video cassette.

According to a preferred embodiment of the present invention, the directory includes, for each recorded item to which it relates, a visually sensible pictorial representation of at least one scene included in the recorded item.

Further in accordance with a preferred embodiment of the present invention, the directory relates to items recorded on an individual video cassette. The directory may be stored at the beginning of the magnetic video tape of the video cassette. Alternatively, the directory may be stored in a random access memory which may be integrally provided with the video cassette or alternatively may be provided on a memory card which may be marketed in association with the video cassette. The random access memory is involuntary, i.e., is not destroyed by power-off.

Still further in accordance with a preferred embodiment of the present invention, the video cassette recorder or camera recorder includes apparatus for providing and storing a directory of recorded items and apparatus for displaying the directory to the user.

Additionally in accordance with a preferred embodiment of the present invention, a symbol such as a number is associated with each visual representation in the directory and the recorder includes apparatus for scrolling the video cassette to the recorded item corresponding to an individual visual representation in response to a user's pressing a symbol associated with the individual visual representation on the recorder control device.

Still further in accordance with a preferred embodiment of the present invention, the visual representation of at least one scene provided for each recorded item includes a visual representation of at least two scenes, wherein the at least two scenes are displayed simultaneously, thereby to provide, for each recorded item, a macro still image including at least two still subimages.

Additionally in accordance with a preferred embodiment of the present invention, the visual representation of at least one scene provided for each recorded item includes a visual representation of at least two scenes, wherein the at least two scenes are sequentially displayed, thereby to provide, for each recorded item, a sequence of images including at least two frames.

Still further in accordance with a preferred embodiment of the present invention, the video recorder includes apparatus for storing the directory on an individual video cassette and apparatus for retrieving the stored representation of the directory from an individual video cassette upon loading of the cassette into the video recorder and for storing the directory in an SRAM in the video recorder.

Further in accordance with a preferred embodiment of the present invention, the directory relates to items recorded on each of a plurality of video cassettes. Optionally, directory information pertaining to an individual video cassette may be accessed without loading the individual video cassette.

There is thus provided in accordance with a preferred embodiment of the present invention a video recorder and cassette directory managing system including a video recorder, and video cassette directory managing apparatus for providing a directory indication to a user of items recorded on at least one video cassette.

Further in accordance with a preferred embodiment of the present invention, the directory includes, for each recorded item to which it relates, a visually sensible representation, such as a pictorial representation, of at least one scene included in the recorded item.

Additionally in accordance with a preferred embodiment of the present invention, a symbol such as a number is associated with each visually sensible representation of an individual recorded item in the directory and the video cassette directory managing apparatus also includes apparatus for instructing the video recorder to scroll the video cassette to an individual recorded item in response to a user's pressing the symbol associated with the corresponding visually sensible representation on a control device of the video recorder.

Still further in accordance with a preferred embodiment of the present invention, the visually sensible representation of at least one scene provided for each recorded item includes a visually sensible representation of at least two scenes, and the at least two scenes are displayed simultaneously, thereby to provide, for each recorded item, a macro still image including at least two still subimages.

Further in accordance with a preferred embodiment of the present invention, the visually sensible representation of at least one scene provided for each recorded item includes a visually sensible representation of at least two scenes, and at least two scenes are sequentially displayed, thereby to provide, for each recorded item, a sequence of images including at least two frames.

Additionally in accordance with a preferred embodiment of the present invention, the video cassette directory managing apparatus includes apparatus for storing a directory of recorded items, and apparatus for displaying the directory to the user.

Further in accordance with a preferred embodiment of the present invention, the apparatus for storing includes apparatus for storing at least a portion of the directory of recording items pertaining to an individual video cassette, on the individual video cassette.

Still further in accordance with a preferred embodiment of the present invention, the system also includes apparatus for storing the directory on an individual video cassette and apparatus for retrieving the stored representation of the directory from an individual video cassette upon loading of the video cassette into the video recorder and for storing the directory in direct association with the video recorder.

Further in accordance with a preferred embodiment of the present invention, the directory indication relates to items recorded on each of a plurality of video cassettes and directory information pertaining to an individual video cassette may be accessed without loading the individual video cassette.

Further in accordance with a preferred embodiment of the present invention, the video recorder may include a video cassette recorder or a video camera recorder.

There is also provided in accordance with a further preferred embodiment of the present invention, a video cassette directory managing system for use in conjunction with a video recorder, the system including apparatus for storing an indication of items recorded on at least one video cassette, and apparatus for displaying the indication of recorded items to a user.

Further in accordance with a preferred embodiment of the present invention, the individual cassette directory memory is located on the magnetic tape of the individual cassette.

Still further in accordance with a preferred embodiment of the present invention, the individual cassette directory memory is a random access memory.

Additionally in accordance with a preferred embodiment of the present invention, the random access memory is integrally formed with the individual cassette.

Further in accordance with a preferred embodiment of the present invention, the random access memory is located on a memory card.

### BRIEF DESCRIPTION OF THE DRAWINGS

The present invention will be understood and appreciated from the following detailed description, taken in conjunction with the drawings in which:
Fig. 1 is a simplified block diagram of video recording apparatus constructed and operative in accordance with a first embodiment of the present invention;
Figs. 2 - 4 are diagrams of directory displays provided in accordance with three respective alternative embodiments of the present invention;
Fig. 5 is a simplified block diagram of video recording apparatus constructed and operative in accordance with a second embodiment of the present invention; and
Fig. 6 is a simplified block diagram of video recording apparatus constructed and operative in accordance with a third embodiment of the present invention.

### DETAILED DESCRIPTION OF PREFERRED EMBODIMENTS

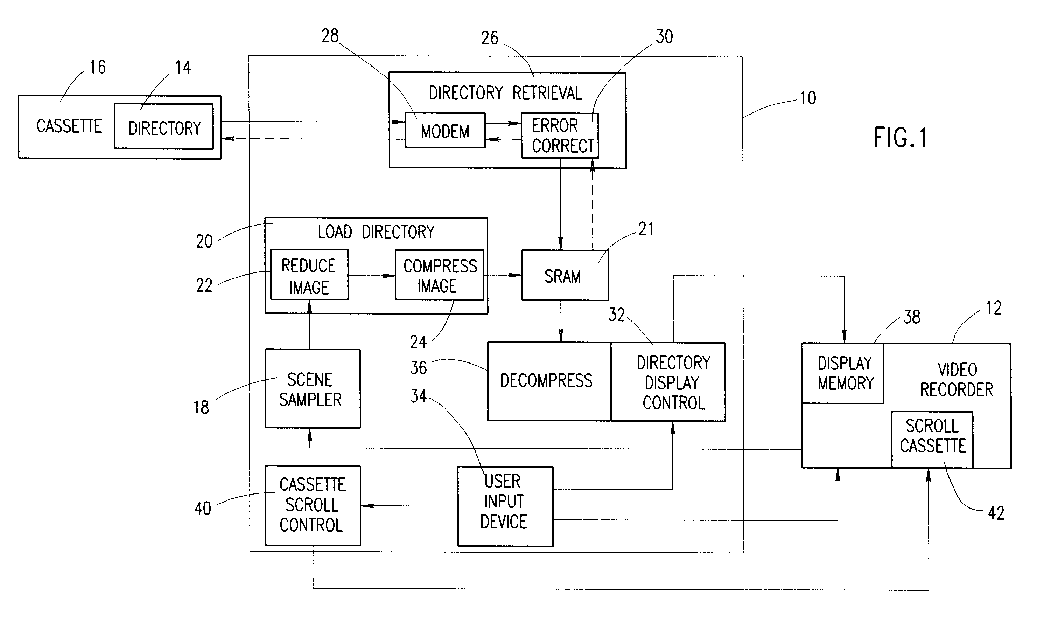

Reference is now made to Fig. 1 which is a block diagram of directory managing apparatus, referenced generally 10, which is constructed and operative in accordance with one embodiment of the present invention. In the embodiment of Fig. 1, a separate directory is provided for each video cassette and is stored on the video cassette itself.

The directory managing apparatus 10 is operative in conjunction with a video recorder 12 to provide and manage a directory 14 of items recorded on a cassette 16. The video recorder may be a conventional video cassette recorder such as a SONY SLV-X95 or a conventional video camera recorder such as a SONY CCD-TR75. Alternatively, the directory managing apparatus 10 may be provided integrally with a video camera recorder or video cassette recorder. The directory 14 is preferably stored at a predetermined location within the cassette 16 such as the beginning of the magnetic tape of cassette 16.

The directory managing apparatus 10 includes a scene sampling unit 18 which is operative when video recorder 12 is in its recording mode. Scene sampling unit 18 is operative to sample and digitize at least one scene from an item being recorded on the cassette 16 and to provide, in association with the at least one sampled scene, an indication of the location of the recorded item on the cassette 16. According to one embodiment of the present embodiment, scene sampling unit 18 operates in accordance with a preprogrammed algorithm which may define a fixed time interval between a plurality of sampled scenes.

A directory loading unit 20 adds entries to the directory. Each new entry includes a stored representation of the scenes sampled by sampling unit 18 from the recorded item and an associated indication of the starting location of the recorded item. Preferably, the directory loading unit 20 does not add entries directly to cassette directory 14.

Instead, a temporary representation of the cassette directory is provided in a suitable storage medium 21, such as an SRAM or a DRAM, which is associated with the video recorder 12 rather than with the cassette 16. In this case, the cassette directory 14 is preferably updated from the SRAM directory 21 only upon ejection of the cassette from video recorder 12, as explained in detail below. A particular advantage of providing a directory which is associated directly with video recorder 12 rather than via cassette 16 is that the user may then view the directory without having to rewind the cassette 16.

The directory loading unit 20 typically comprises an image reducing unit 22 which reduces the images received from scene sampler 18 by a suitable technique such as subsampling. The directory loading unit 20 also comprises an image compression unit 24 which is operative to compress recorded frames, using a suitable image compression technique such as a JPEG algorithm.

Subsampling techniques are described in Digital Coding of Waveforms, N.S. Jayant and P. Noll, Prentice-Hall, 1984, particularly on pages 321-323. JPEG compression algorithms are described in a publication by the Joint Photographic Experts Group, referenced ISO/IEC JTC1/SC2/WG10 CCITT SGVIII. The disclosures of both the above documents are incorporated herein by reference.

A directory retrieval unit 26 is provided which is operative to load an existing cassette directory 14 onto SRAM 21 upon loading of cassette 16 into video recorder 12, and to load an updated SRAM directory onto cassette directory 14 upon ejection of a cassette 16 from video recorder 12.

Cassette directory 14 may be represented in any suitable form. For example, the directory may be recorded as a video signal. However, the quality of a video recorded directory might deteriorate unacceptably within a relatively short time. Therefore, the directory is preferably stored digitally.

If the directory is digital, directory retrieval unit 26 may comprise a modem 28 which performs a modulation for converting the digital directory into an analog signal suitable for recording into cassette directory 14. Modem 28 is also operative to perform a demodulation for converting the analog signal in cassette directory 14 into a digital signal suitable for storage in SRAM 21.

Modem 28 may be either an audio modem or, preferably, a video modem. If an audio modem is employed, the modem speed is approximately 9.6 - 64 kbps, due to the audio bandwidth. The video modem may be a base-band modem such as a PAM, PSK, QAM or FSK which may be operative to store data at a rate of approximately 1 - 10 Mbps.

Directory retrieval unit 26 also preferably comprises an error correction unit 30. Error correcting unit 30 is operative to correct errors which may occur while demodulating the signal in cassette directory 14 into digital form for storing in SRAM directory 21. For example, errors may result from a dirty reading head or a dirty recording head. Any suitable error correction code may be employed such as BCH code, which is described in the following publication, the disclosure of which is incorporated herein by reference:

Error Control Coding, Shu Lin /D. J. Costello, Prentice-Hall, 1983, particularly chapter 6 on page 141.

A directory display control unit 32 controls display of the directory 14 to a user in response to user input received via a user input device 34 such as a remote video cassette recorder control device. The directory display control unit 32 typically comprises a decompressor 36 which decompresses the output of SRAM 21. The decompressed image provided by decompressor 36 may be stored in a display memory 38 of video recorder 12, such as a VRAM.

A cassette scroll control unit 40 controls scrolling of cassette 16 in response to a user's selection of an individual recorded item from the displayed directory. The user's selection may be received via user input device 34. For example, the displayed directory may include, for each individual visual representation of an individual recorded item, an individual number superimposed upon or otherwise associated with the individual visual representation. The user presses the individual number on the user input device in order to indicate that the cassette 16 should be scrolled to the individual recorded item. Cassette scroll control 40 interfaces with the cassette scrolling mechanism 42 of the video recorder 12.

Directory managing apparatus 10 of Fig. 1 may have at least the following modes of operation:
I. Load cassette directory onto SRAM 21 after a cassette is loaded onto the video recorder 12;
II. Load SRAM directory onto cassette before a cassette is ejected from video recorder 12;
III. Update SRAM directory 21 when a new item is recorded onto a cassette loaded in the video recorder 12; and
IV. Display the directory and select a recorded item represented therein.

A preferred method for employing directory managing apparatus 10 in mode I is now described:
a. The user loads the cassette 16 onto the video recorder 12.
b. Video recorder 12 rewinds cassette 16 to the beginning. As explained above, directory 14 is preferably stored at the beginning of cassette 16.
c. Video recorder 12 starts to play and the directory retrieval modem 28 converts the recorded directory signal 14 into bits and stores the resulting compressed data in the SRAM 21.
d. Errors in the directory are corrected.
e. The corrected directory is recorded onto the SRAM.

A preferred method for employing directory managing apparatus 10 in mode II comprises the following steps:
a. Preferably, the SRAM is inspected to determine whether its directory has been updated since the present cassette was loaded. If not, the cassette is ejected and mode II is terminated. If so, continue to step b.
b. The cassette is rewound to the beginning by video recorder 12.
c. Error correction bits are added to the SRAM directory data.
d. Modem 28 performs a modulation to convert the SRAM directory data to an analog video signal suitable for video recorder 12.
e. Cassette 16 is ejected from video recorder 12.

A preferred method for employing directory managing apparatus 10 in mode III (record) comprises the following steps:
a. The user decides to record a new item on cassette 16. Directory manager 10 is alerted to this occurrence by sensing a suitable prompt, such as the user having pressed the record button on remote control device 34.
b. When recording begins, scene sampling unit 18 samples at least one scene from the recorded item in accordance with a predetermined timing sequence and digitizes the at least one scene.
c. Directory loading unit 20 reduces the at least one scene using a suitable technique such as subsampling. Directory loading unit 20 also preferably compresses the subsampled data. The reduced and compressed scenes are preferably stored in SRAM 21 of video recorder 12, together with information identifying the starting location of the recorded item on the cassette.
d. Preferably, a suitable indication is stored in SRAM 21 to indicate that the SRAM directory has been updated since the present cassette was loaded in the video receiver 12.

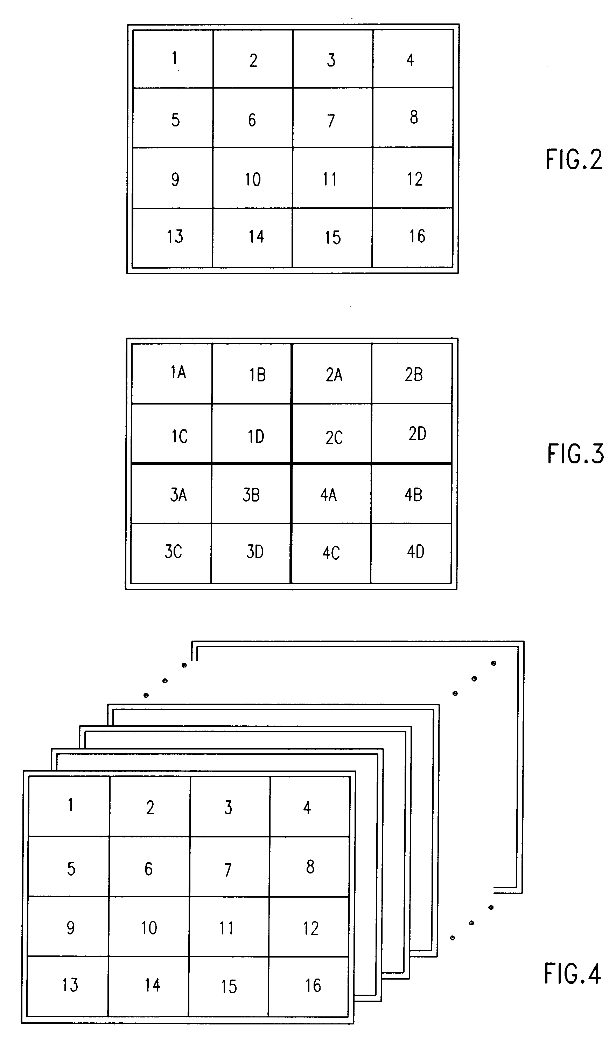

A preferred method for employing directory managing apparatus 10 in mode IV (display and select) comprises the following steps:
a. The user indicates a desire to access the directory by pressing a button or buttons on user input device 34.
b. The digital directory data in SRAM 21 is decompressed by decompressor 36 and loaded onto display memory 38.
c. When the display memory loading step has terminated, video recorder 12 stops running and displays the directory of cassette 16 to the user.
d. The user views the displayed directory and selects a desired recorded item. For example, as explained above, each item of the directory may have an identifying number superimposed thereupon. The user may then punch in this number, using remote control device 34.
e. Cassette scroll control unit 40 orders video recorder 12 to move fast to the selected item on cassette 16. is now made to Figs. 2 - 4 which are diagrams of a displayed indication to a user of items recorded on a particular cassette, provided in accordance with three respective alternative embodiments of the present invention. The displayed indication of Fig. 2 includes, for each of up to a maximum predetermined number of recorded items, such as 16 recorded items, a visually sensible pictorial representation of an individual scene included in the recorded item. The locations at which individual scenes may be displayed are numbered 1 to 16 in Fig. 2.

The directory of Fig. 3 includes, for each of up to a maximum predetermined number of recorded items, such as 4 recorded items, a macro still image comprising a predetermined number of simultaneously displayed still subimages such as 4 simultaneously displayed still subimages. The 4 macro still images in Fig. 3 are referenced respectively by numerals 1, 2, 3 and 4. The 4 still subimages for an individual macro still image are referenced by letters A, B, C and D respectively.

Preferred storage parameters for storing a still image directory such as the directories of Figs. 2 and 3 on cassette 16 of Fig. 1 are now described. The directory of Fig. 2 may be stored digitally at the beginning of cassette 16. Each displayed frame may be represented by approximately 512 x 480 pixels, each pixel being represented in approximately 24 bits, giving a total of approximately 5.8 Mbits. Image compression unit 25 may compress each frame to approximately 172 kbits or 21.5 kBytes.

The data may be recorded by a 1 Mbps video modem and will then occupy 6 video frames, corresponding to approximately 180 ms. Alternatively, the data may be recorded by a 9.6 kbps audio modem, in which case it will occupy 18 seconds of the audio recording strip. In both cases, the portion of the video tape required to store the directory is very small compared to the total length of the cassette.

A larger cassette volume is required to store a directory of the type illustrated in Fig. 3, in which more than one scene is provided to represent each item recorded on the cassette. For example, if each macro image, corresponding to a single recorded item, includes four subimages, then four times as much cassette volume is required, namely, 24 video frames or 72 seconds of audio track, instead of only 6 video frames or 18 seconds of audio track for storing the directory of Fig. 2.

Preferred storage parameters for storing a still image directory such as the directories of Figs. 2 and 3 on SRAM 21 of Fig. 1 are now described. If the directory of Fig. 2 is employed, in which only one scene represents each recorded item, only 172 kbits of memory may be employed, or less than 32 KByte. If the directory of Fig. 3 is employed, in which each recorded item is represented by four scenes, 4 x 21.5 Kbytes may be employed, which is less than 96 Kbytes.

Reference is now made to Fig. 4 which illustrates an alternative type of directory, also termed herein a "sequence directory". The directory of Fig. 4 includes, for each of up to a maximum predetermined number of recorded items, such as 16 recorded items, a visual representation of a suitable number of scenes or frames for sequential display, such as 8 sequential frames. The eight frames may be a predetermined time interval apart on the cassette, such as 4 seconds, and may be displayed at a predetermined rate, such as one frame per 4 seconds. Each sequence may be displayed repeatedly.

Preferred storage parameters for storing the sequence directory of Fig. 4 on SRAM 21 of Fig. 1 are now described. The directory of Fig. 4 may be represented digitally and may be compressed to 172 kbits per frame. 172 kBytes will then be required to store 8 frames. The size of SRAM 21 may, therefore, be less than 192 KByte. The directory will occupy 42 video frames and the total time required to record the directory on the video track will be 1.4 seconds. On an audio track with 9.6 kbps, 143 seconds will be required to record the directory.

With reference to the above description of Figs. 2 - 4, the values designated for the maximum number of recorded items and for the number of scenes which are displayed per recorded item and for time intervals between pluralities of scenes selected to represent a recorded item and for the number of bits per pixel are all merely exemplary and are not intended to be limiting. Also, the directory may be presented on one frame or on a plurality of frames. Each individual scene from each individual recorded item is generally displayed in reduced size, the reduction depending on the number of scenes displayed per directory frame.

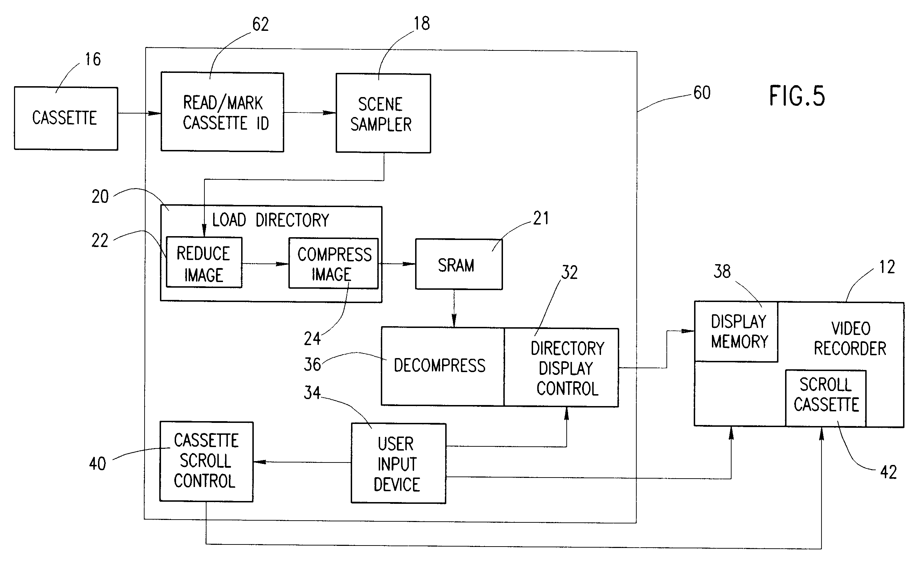

Reference is now made to Fig. 5 which illustrates directory managing apparatus, referenced generally 60, which is constructed and operative in accordance with another preferred embodiment of the present invention. The directory managing apparatus 60 is preferably provided integrally with video recorder 12.

The embodiment of Fig. 5 is similar to the embodiment of Fig. 1 except that a single directory, termed herein a "super-directory", may be provided for a plurality of cassettes. Also, the super-directory is permanently stored in direct association with the video cassette recorder, such as in SRAM 21, rather than on individual cassettes.

The super-directory includes a suitable number of directories, also termed herein cassette directories, such as 50 cassette directories, each relating to items recorded on an individual cassette. A particular advantage of the embodiment of Fig. 5 is that information pertaining to an individual cassette may be accessed without loading the individual cassette onto the video recorder 12.

Fig. 5 is now described in detail. Elements of Fig. 5 which correspond to elements of Fig. 1 are identically numbered and are not described herein, for brevity. The embodiment of Fig. 5 is similar to the embodiment of Fig. 1 except for the following points of difference:

As explained above, cassette directories are stored as part of the super-directory and need not be stored on the corresponding cassettes. However, it is appreciated that the embodiments of Figs. 1 and 5 may be combined such that permanent storage of a super-directory is provided in direct association with video recorder 12 and permanent storage of each cassette directory is provided on each corresponding cassette.

Typically, each cassette directory includes an identifying symbol which identifies the cassette to which the directory pertains. The identifying symbol may be stored in any suitable manner. For example, the cassette identification may be stored in the audio channel or in the vertical blank between the fields, by using a PAM, PSK or QAM modem.

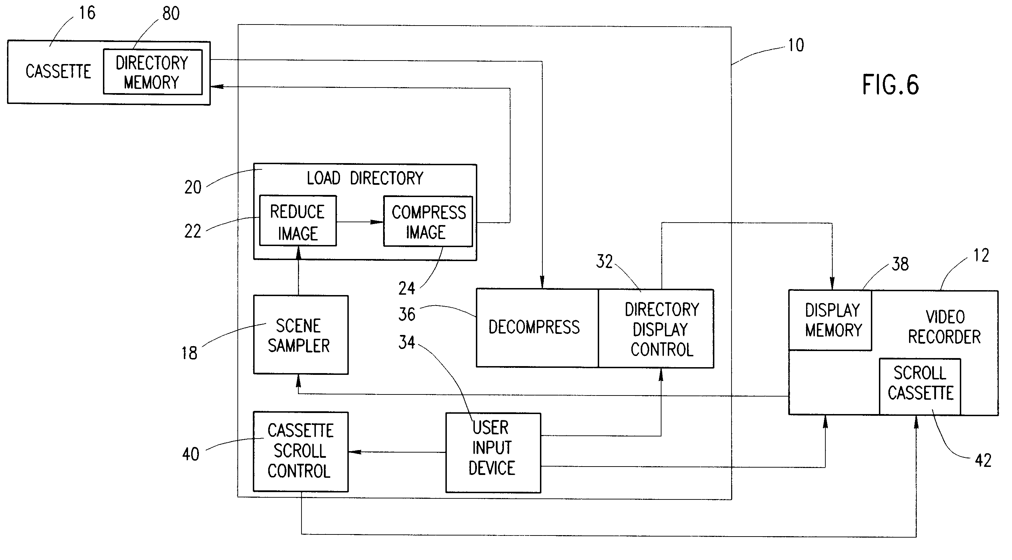

When a cassette is loaded onto the video recorder, a cassette ID handling unit 62 detects the identifying symbol on the cassette if an identifying symbol exists. If no identifying symbol exists, ID handling unit 62 stores an identifying symbol on the cassette. If an identifying symbol exists and is recognized as the symbol of an individual one of the plurality of cassette directories already included in the super-directory, the corresponding cassette directory in the super-directory is updated if a new item is recorded on the cassette. If an identifying symbol exists and is not recognized as one of the plurality of cassette directories already included in the super-directory, a new cassette directory is added to the super-directory. The new cassette directory is updated if a new item is recorded on the cassette. Reference is now made to Fig. 6 which illustrates another embodiment of video recording apparatus. The apparatus of Fig. 6 is generally similar to Fig. 1 except that the directory 14 of Fig. 1, which was stored on the magnetic video tape of the video cassette, is replaced by a digital directory memory 80. Directory memory 80 is a random access memory such as an SRAM or an EEPROM which may be integrally provided with the video cassette 16, as shown, or alternatively may be provided on a memory card which may be marketed in association with the video cassette 16. The directory memory 80 is typically involuntary, i.e., is not destroyed by power-off.

As shown, if random access memory is provided as in Fig. 6, directory retrieval unit 26 and SRAM 21 may be eliminated.

It is appreciated that the various features of the invention, described herein in the contexts of separate embodiments for the sake of clarity, may be combined in any suitable manner to obtain a single video recorder characterized by more than one of the features described herein.

It will be appreciated by persons skilled in the art that the present invention is not limited to what has been particularly shown and described hereinabove. Rather, the scope of the present invention is defined only by the claims that follow:

## Claims

1. A video recorder and cassette directory managing system comprising:
a video recorder; and
a video cassette directory manager operative to provide a directory indication to a user of items recorded on at least one video cassette.

2. A system according to claim 1 wherein the directory includes, for each recorded item to which it relates, a visually sensible representation of at least one scene included in the recorded item.

3. A system according to claim 2 wherein a symbol such as a number is associated with each visually sensible representation of an individual recorded item in the directory and the video cassette directory manager also comprises a scroll controller operative to instruct the video recorder to scroll the video cassette to an individual recorded item in response to a user's pressing the symbol associated with the corresponding visually sensible representation on a control device of the video recorder.

4. A system according to claim 2 or claim 3 wherein the visually sensible representation of at least one scene provided for each recorded item includes a visually sensible representation of at least two scenes, and wherein the at least two scenes are displayed simultaneously, thereby to provide, for each recorded item, a macro still image comprising at least two still subimages.

5. A system according to claim 2 or claim 3 wherein the visually sensible representation of at least one scene provided for each recorded item includes a visually sensible representation of at least two scenes, and wherein the at least two scenes are sequentially displayed, thereby to provide, for each recorded item, a sequence of images comprising at least two frames.

6. A system according to any of claims 2 - 5 wherein the visually sensible representation of at least one scene includes a pictorial representation of at least one scene.

7. A system according to any of the preceding claims wherein said video cassette directory manager comprises:
a directory memory operative to store a directory of recorded items; and
a directory display control operative to provide a display of the directory to the user.

8. A system according to claim 7 wherein said directory memory comprises an individual cassette directory memory for storing at least a portion of the directory of recording items pertaining to an individual video cassette, on the individual video cassette.

9. A system according to claim 8 wherein said individual cassette directory memory is located on the magnetic tape of the individual cassette.

10. A system according to claim 8 wherein said individual cassette directory memory comprises a random access memory.

11. A system according to claim 10 wherein the random access memory is integrally formed with the individual cassette.

12. A system according to claim 10 wherein the random access memory is located on a memory card.

13. A system according to any of claims 8 -12 and also comprising:
a cassette directory retriever upon load, operative to retrieve the stored representation of the directory from an individual video cassette upon loading of the video cassette into the video recorder and to store the directory in direct association with the video recorder.

14. A system according to any of the preceding claims wherein the directory indication relates to items recorded on each of a plurality of video cassettes and directory information pertaining to an individual video cassette may be accessed without loading the individual video cassette.

15. A video recorder and video cassette directory managing system according to any of the preceding claims wherein said video recorder comprises a video cassette recorder.

16. A video recorder and video cassette directory managing system according to any of the preceding claims wherein said video recorder comprises a video camera recorder.

17. For use in conjunction with a video recorder, a video cassette directory managing system comprising:
a directory memory for storing an indication of items recorded on at least one video cassette; and
a directory display control operative to provide a display of the indication of recorded items to a user.
